# EUROPEAN PATENT SPECIFICATION

(11) **EP 2 325 921 B1**
(45) Date of publication and mention of the grant of the patent: **22.02.2017**
(21) Application number: 10190027.2
(22) Date of filing: 04.11.2010
(51) Int. Cl.: H01M 2/10, H01M 10/6555, H01M 10/6561, H01M 10/643, H01M 10/6566, H01M 10/613

(54) **Low Thermal Expansion Battery Module**
Batteriemodul mit geringer Wärmeausbreitung
Module de batterie à faible expansion thermique

(30) Priority: 12.11.2009 US 616846
(43) Date of publication of application: 25.05.2011
(73) Proprietor: MAHLE International GmbH, 70376 Stuttgart (DE)
(72) Inventor: Ghosh, Debashis, Williamsville, NY 14221-8311 (US); Hambruch, John R., Burt, NY 14028 (US)
(74) Representative: BRP Renaud & Partner mbB Rechtsanwälte Patentanwälte Steuerberater

(56) References cited:
- EP-A1- 2 151 880
- EP-A1- 2 352 185
- WO-A1-2007/081759
- DE-A1-102006 040 202
- US-A1- 2008 026 284
- US-A1- 2008 076 016

## Description

### TECHNICAL FIELD

The present invention relates to a battery pack assembly for providing electrical power.

### BACKGROUND OF THE INVENTION

It is well known to combine a number of stacks, each including a number of individual cells, for providing electrical power. Heat is generated as electrical current flows into and out of the cells. If the heat is not effectively managed, it can have a significant negative impact on the performance and lifetime of the cells and of the battery pack assembly as a whole. Limiting the temperature difference along the exterior of each of the cells in the stacks can be important in maximizing the performance and lifetime of the entire battery pack assembly.

To maintain the battery packs and the cells at a desired temperature, a cooling system is often provided within the battery pack assembly. Conventionally, these cooling systems pass air over and around the battery packs and the cells. In this type of system, the cooling air absorbs heat as it passes over the cells. Document EP2151880A1 in the name of the applicant, discloses a cooling system including an air inlet chamber and a slot. The air flows circumferentially around the walls of the cells from the air inlet chamber to the slot to cool the cells. US2008/0076016A1 discloses another example of cooling system in a battery pack assembly.

Also WO2007/081759, US2008/0026284, DE10200604 refer to battery packs.

U.S. Patent Application No. 2007/0046259 to Hideo Shimizu discloses a battery pack assembly including a plurality of stacks and a casing enclosing the stacks. The gap between the slots of the casing and the cells of the stacks serially decreases as the air flows in series circumferentially along a plurality of stacks. The velocity of the flow of air increases as the gap between the casing and the cells decreases.

As the cooling air warms, its capacity to pick up heat decreases, thereby creating cooler temperatures near the air inlet chamber and warmer temperatures near the exit.

### SUMMARY OF THE INVENTION

The invention provides for such a battery pack according to claim 1.

The flow interrupters are circumferentially spaced from each other and extend radially in the gap between the cell wall and plastic casing to disrupt the flow of air from the air inlet chamber to the exit.

The primary function of the flow interrupters is to provide a boost to the heat transfer coefficient of the air thereby increasing the amount of heat transferred from the cells to the air adjacent those flow interrupters at low overall pressure drop penalty. In addition, they can also serve as weight bearing posts to support the weight of the cells and can act as spacers to maintain the gap between the cell wall and the plastic case to permit airflow.

### BRIEF DESCRIPTION OF THE DRAWINGS

Other advantages of the present invention will be readily appreciated, as the same becomes better understood by reference to the following detailed description when considered in connection with the accompanying drawings wherein:

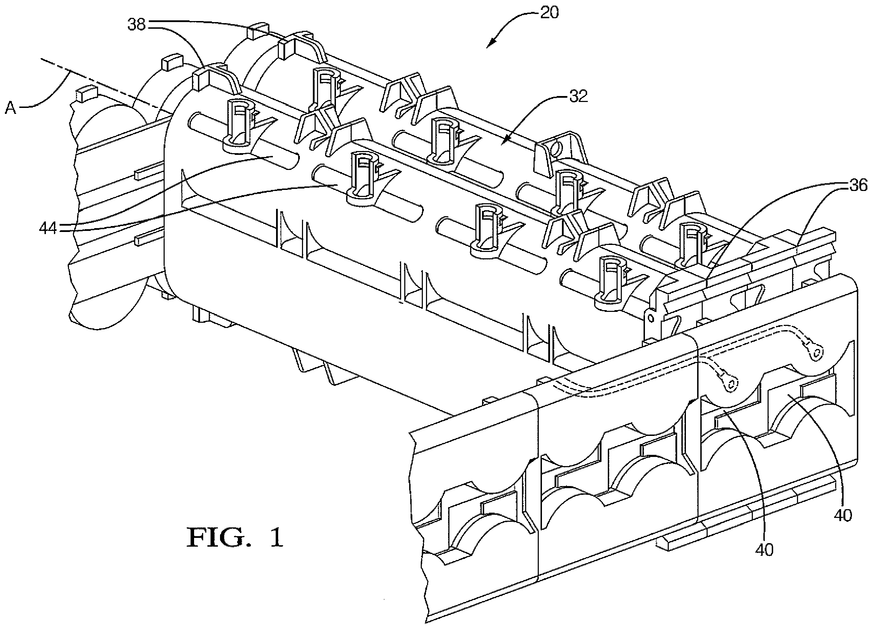

Figure 1 is a fragmentary perspective view of an embodiment of the invention;

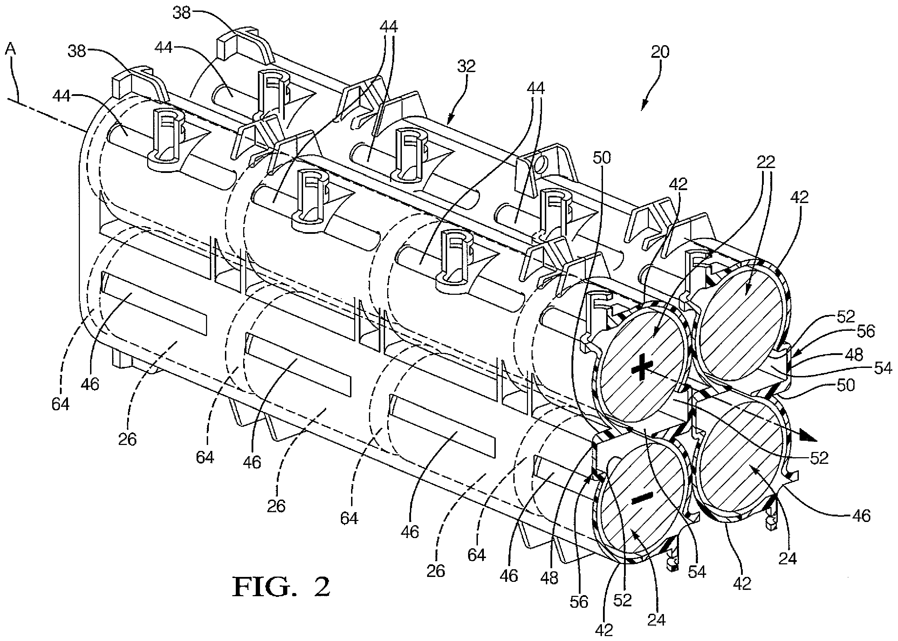

Figure 2 is a perspective view and in partial cross-section of a pair of battery packs used in the embodiment of Figure 1;
Figure 3 is a fragmentary front perspective view of a first embodiment with half of the casing removed to show the cells;
Figure 4 is a schematic view illustrating interruptors with varying gap between the cell walls and the upper and lower case;
Figure 5 is a fragmentary front perspective view of a second embodiment with half of the casing removed to show the cells;
Figure 6 is a fragmentary front perspective view of a third embodiment with half of the casing removed to show the cells; and
Figure 7 is a cross-sectional view showing air flowing circumferentially along the cell wall from the air inlet chamber to the exit.

### DETAILED DESCRIPTION OF THE INVENTION

Referring to the Figures, wherein like numerals indicate corresponding parts throughout the several views, the invention includes a battery pack **20** assembly for providing electrical power.

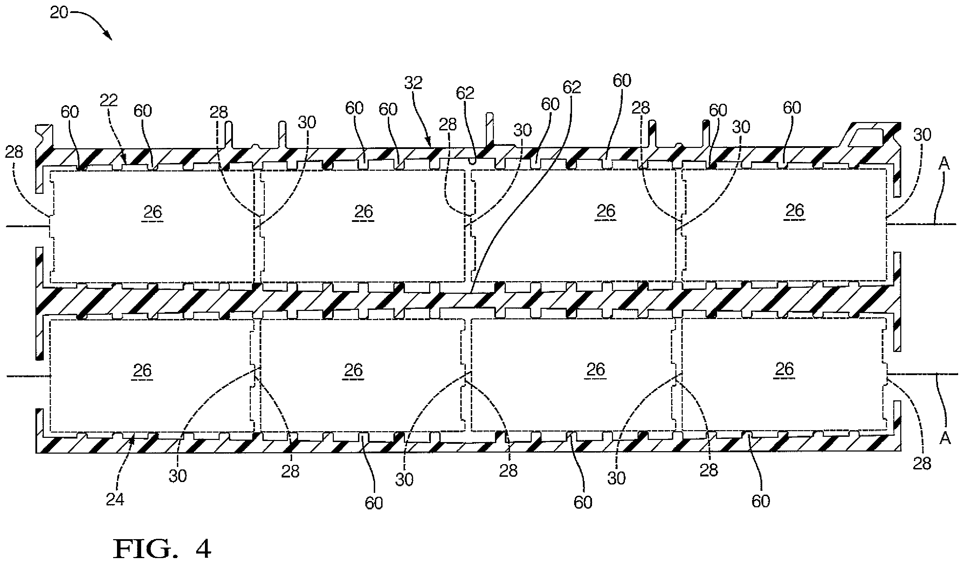

The battery pack assembly includes a battery pack **20,** generally shown, including an upper stack **22** and a lower stack **24** extending in spaced and parallel relationship along a cell axis **A.** The battery pack **20** defines an air path extending along and between the stacks **22, 24** for cooling. Each of the stacks **22, 24** includes a plurality of cylindrical cells **26** for storing and transmitting electrical power, and each of the cells **26** has an anode **28** disposed at one end and a cathode **30** disposed at the other end. The cells **26** are arranged in cathode-to-anode relationship as is well known in the art. As such, the cells **26** of each of the stacks **22, 24** are connected to one another in electrical series connection. The anodes **28** of the cells **26** in the upper stack **22** face in one direction while the anodes **28** in the lower stack **24** face in the opposite direction, as is illustrated in Figure 4.

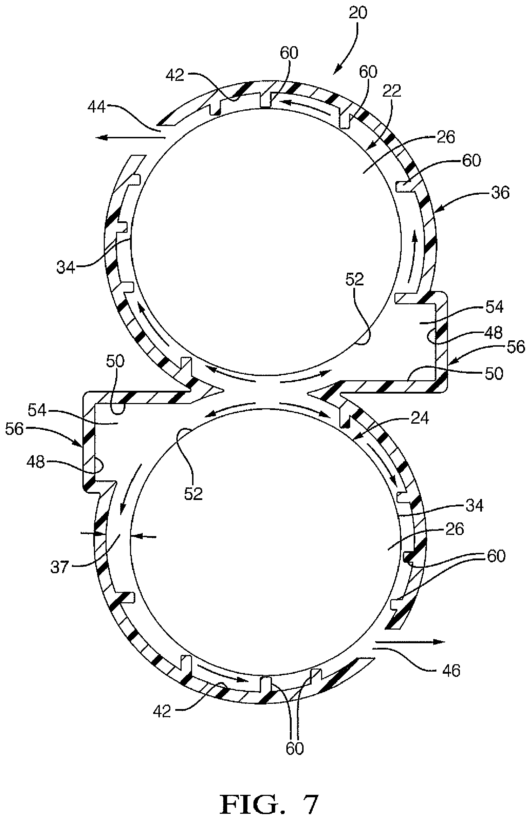

The battery pack **20** further includes a casing **32,** generally indicated, nesting and enclosing the upper and lower stacks **22, 24** and having a front and a back. As best shown in Figure 7, the battery pack **20** defines a gap **37** between the casing **32** and the cell walls **34** for air to flow therethrough. A front end cover **36** is disposed at the front of the battery pack **20** and a back end cover **38** is disposed at the back of the battery pack **20.** The front and back end covers **36, 38** enclose the ends of the casing **32** and the front end cover **36** defines an air inlet **40** for receiving a flow of air. The casing **32** defines a semi-cylindrical section **42** extending circumferentially around the cell walls **34** of each of the upper and lower stacks **22, 24** and longitudinally along the cell axis **A** between the front and back of the casing **32.**

The semi-cylindrical section **42** adjacent the upper stack **22** defines a plurality of upper slots **44** and the semi-cylindrical section **42** adjacent the lower stack **24** defines a plurality of lower slots **46.** The upper and lower slots **44, 46** discharge the flow of air from the casing **32.**

The casing **32** defines a plurality of reverse-L-shaped pieces **56,** generally indicated, each having a long leg **48** extending tangentially from one of the semi-cylindrical sections **42** to a short leg **50** extending transversely and spaced from a remainder portion **52** of the stack for creating an enclosed space around the perimeter of each of the stacks **22, 24** to define an air inlet chamber **54** extending axially from the air inlet **40** of the front end cover **36** to the closed back end cover **38.** Each of the air inlet chambers **54** is defined by the long leg **48** and the short leg **50** and the cylindrical cell walls **34** of the remainder portion **52** of the associated stack. The air inlet chambers **54** are in fluid communication with the air inlet **40** of the front cover to receive the flow of air therefrom. The semi-cylindrical sections **42** and the reverse-L-shaped pieces **56** of the casing **32** combine to completely enclose the upper and lower stacks **22, 24.**

In operation, the flow of air enters the casing **32** through the air inlet **40** of the front end cover **36.** The flow of air then flows axially through the air inlet chamber **54** and circumferentially through the gaps **37** between the cell walls **34** and the casing **32** to be discharged through the upper and lower slots **44, 46** of the casing **32.**

A plurality of flow interrupters **60** are disposed on either the cell walls **34** or the casing **32.** The flow interrupters **60** are circumferentially spaced from each other and extend into the gap **37** toward the other of the cell walls **34** and the casing **32** for disrupting the flow of air from the air inlet chambers **54** to the upper and lower slots **44, 46.** In other words, as the flow of air travels circumferentially along the cell **26** from the air inlet chamber **54** to the associated one of the upper and lower slots **44, 46,** it is disrupted by the flow interrupters **60** to provide a boost in the heat transfer coefficient of the air and thus increase the amount of heat transferred from the cells **26** to the air adjacent those flow interrupters **60.**

The flow interrupters **60** are spaced a predetermined distance from each other with the distance being greater adjacent the air inlet chamber **54,** which is the remainder portion **52** of the cells **26,** and serially decreasing circumferentially to the upper and lower slots **44, 46.** The flow interrupters **60** are close together adjacent the upper and lower slots **44, 46** because the air is the warmest at those locations. Having a decreased distance between flow interrupters **60** increases the rate of heat transfer to the warmer air, thereby providing a more even cooling rate across the cell walls **34.** In other words, the variable spacing between the flow interrupters **60** along the circumference of the stacks **22, 24** allows the flow of air to cool the cells **26** at a more even rate across the circumference of the cell walls **34.** The flow interrupters **60** work more efficiently if made integral to the cell wall **34.** However, sometimes due to OEM constraints, no enhancement to the cell wall **34** is possible, and one has to live with a flat cell wall surface **34.** In that case, the flow interrupters **60** are molded onto the plastic case **32.**

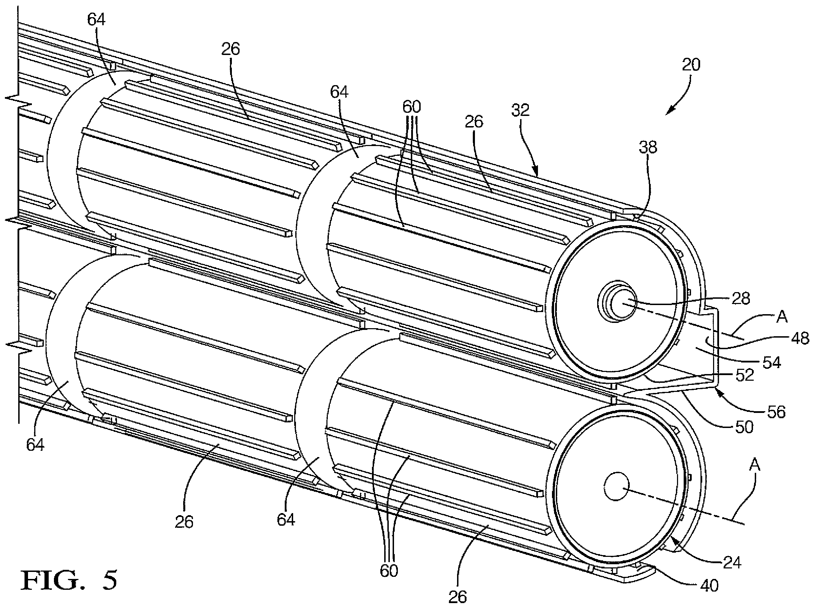

Figure 5 shows a first embodiment of the invention. Each of the flow interrupters **60** of the first embodiment extends radially from the cell wall **34** to a point in the gap **37** between the associated cell wall **34** and the casing **32.** A spacer **64** is disposed between adjacent cells **26** of the upper and lower stacks **22, 24.** The spacer **64** extends radially outwardly from the cells **26** to engage the casing **32** for positioning, insulating and orienting the cell **26.** The spacer **64** is preferably made of an insulating material, e.g. rubber, to prevent electrical conduction between the cells **26.**

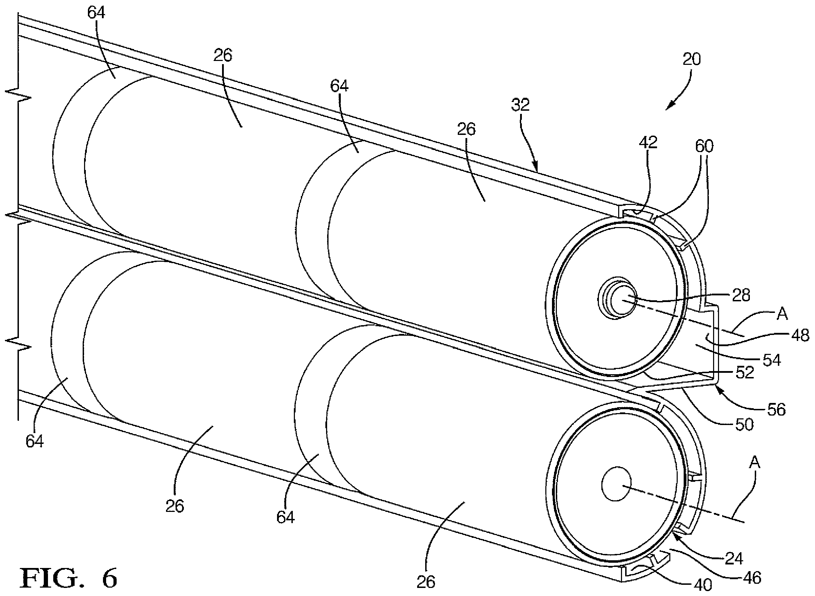

Figure 6 shows a third embodiment of the invention. Each of the flow interrupters **60** extends radially from the casing **32** to a point in the gap **37** between the casing **32** and the cell walls **34.** Similar to the first embodiment described above, a spacer **64** is disposed between adjacent cells **26** of the upper and lower stacks **22, 24.** The spacer **64** extends radially outwardly from the cells **26** to engage the casing **32** for positioning and orienting each of the cells **26.**

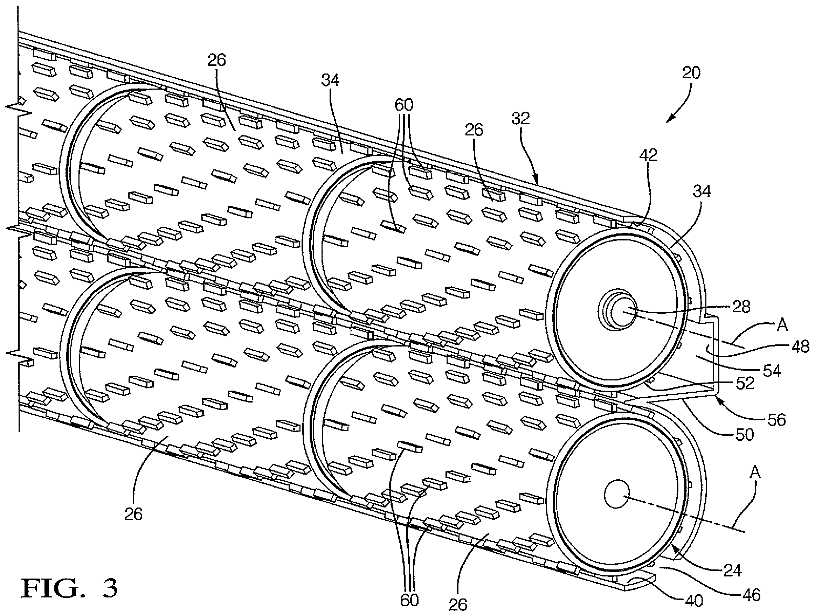

The flow interrupters **60** can be all in line, as shown in Figure 5, or they can be staggered circumferentially, as shown in Figure 3. If the height of the flow interrupters **60** are less than the gap **37** height, then the flow interrupters **60** can be made in line. However, if the flow interrupter **60** height is equal to the gap **37** height, then inline arrangement would completely choke the flow; in that case, the circumferentially staggered arrangement of flow interrupters **60,** as shown in Figure 3, is needed. The staggered arrangement of the flow interrupters **60** enhances heat dissipation by the cells **26** with lower pressure drop.

Figures 3 and 4 show a third embodiment of the invention. Each of the flow interrupters **60** extends radially from the casing **32** into the gap **37** between the cell wall **34** and the casing **32.** In addition to disrupting the flow of air as described above, the flow interrupters **60** of the first embodiment function to support the weight of the cells **26** by the case and maintain the relative position of the cells **26** with in the casing **32.** In this configuration the need for a spacer **64** is eliminated. This offers significant cooling advantage as the spacers **64** of the first and second embodiments cover 10-15% of the surface area of each of the cells **26.** Additionally, removing the spacers **64** exposes the cathode **30** and part of the anode **28** of each of the cells **26** to the flow of air. Heat is transferred from cathodes **30** and anodes **28** of the cells **26,** to the air very efficiently.

Each of the gaps **37** may have a cross-section that varies in size. For example, as shown in Figure 4, the cross-section of the gaps **37** increases from the front to a larger midpoint **62** and increases from the back to the larger midpoint **62.** The height of the flow interrupters **60** varies to correspond with the varying gap **37.**

In the third embodiment of Figures 3 and 4, all the cells **26** in each of the stacks **22, 24,** in this case four, are wrapped around by a mylar film (not shown) to hold them together. Additionally, all of the upper slots **44** can be combined and all of the lower slots **46** can be combined into a single continuous slot of varying opening.

Figure 7 shows a cross-section of a fourth embodiment. In this embodiment, the spacers **64** are not totally eliminated, however, some of the weight of the cells **26** is supported by the flow interrupters **60** disposed beneath each of the stacks **22, 24.** Supporting the weight of the stacks **22, 24** with the flow interrupters **60** significantly reduces the required width of the spacer **64.** The additional surface area exposed for heat transfer due to the thinner spacers **64** keep also improves the efficiency of the cooling of the cells **26.** In other words, all the flow interruptors do not fill the entire height of the gap **37** between the cell **26** and the plastic. Only, the weight bearing interrupters at the bottom of each of the stacks **22, 24** run the entire height of the gap **37.** The weight bearing flow interrupters **60** are made thicker in cross section than the rest for strength. The rest of the flow interrupters **60** molded circumferentially only extend partially into the gap **37.**

As seen in Figure 7, the flow interrupters **60** of the fourth embodiment extend horizontally or vertically into the gap **37** as opposed to radially in the first three embodiments. Having flow interrupters **60** disposed only horizontally or vertically as opposed to being radial facilitates injection molding the plastic casing **32.**

Flow interrupters **60** of the above embodiments are ribs placed perpendicular to the air stream to interrupt the flow and thus enhance heat transfer by increasing the local heat transfer coefficient of cooling air. The flow interrupters **60** can be employed in ways, built on the cell wall **34** (best shown in Figure 5) or on the casing **32** (best shown in Figure 6). They are radial extensions that can run as single rib along the full length of a cell **26** (shown in Figures 5 and 6) or multiple ribs spanning a portion of the length of each cell **26** (shown in Figures 3 and 4).

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A battery pack assembly for providing electrical power comprising:
a battery pack **(20)** including an upper stack **(22)** extending along a cell axis **(A)** and including more than one cell **(26)** and defining an air path for cooling;
each of said cells **(26)** having a cell wall **(34);**
said battery pack **(20)** including a casing **(32)** having a front and a back and enclosing said upper stack **(22)** and defining an air inlet chamber **(54)** for receiving a flow of air and an upper slot **(44)** for dispensing the flow of air; and
said battery pack **(20)** defining a gap **(37)** between said cell wall **(34)** and said casing **(32)** for channeling the flow of air therethrough;
**characterized by**
a plurality of flow interrupters **(60)** disposed in said gap **(37)** on at least said cell wall **(34),** or on at least said casing **(32),** and being circumferentially spaced from each other and extending toward said casing **(32),** respectively toward said cell wall **(34),** for disrupting the flow of air from said air inlet chamber **(54)** to said upper slot **(44);** and
at least one of said flow interrupters **(60)** extends from said cell wall **(34),** respectively from said casing **(32),** into said gap **(37)** to engage said casing **(32),** respectively said cell wall **(34).**

2. The assembly as set forth in claim 1 wherein said gap **(37)** has a cross-section increasing in size from said front to a larger midpoint **(62)** and increasing in size from said back to said larger midpoint **(62).**

3. The assembly as set forth in claim 1 or 2 wherein each of said plurality of flow interrupters **(60)** extends from said cell wall **(34),** respectively said casing **(32),** into said gap **(37)** to engage said casing **(32),** respectively said cell wall **(34).**

4. The assembly as set forth in any of the preceding claims wherein said slot is disposed diametrically opposite said air inlet chamber **(54).**

5. The assembly as set forth in any of the preceding claims wherein said battery pack (20) further includes a lower stack **(24).**

6. The assembly as set forth in claim 5 wherein said upper and lower stacks **(22, 24)** of said battery pack **(20)** extend in side by side and parallel relationship.

7. The assembly as set forth in claim 6 wherein each of said upper and lower stacks **(22, 24)** includes a plurality of cells **(26)** for storing and transmitting electrical power.

8. The assembly as set forth in claim 7 wherein said casing **(32)** defines a semi-cylindrical section **(42)** extending circumferentially about each of said upper and lower stacks **(22, 24)** and longitudinally along said cell axis **(A)** between said front and back of said casing **(32).**

9. The assembly as set forth in claim 8 wherein said casing **(32)** defines a plurality of reverse-L-shaped pieces with each reverse-L-shaped piece **(56)** having a long leg **(48)** extending tangentially from one of said semi-cylindrical sections **(42)** to a short leg **(50)** extending transversely and spaced from a remainder portion **(52)** of said stack for creating an enclosed space around the perimeter of said stack to define said air inlet chamber **(54).**

10. The assembly as set forth in claim 9 wherein said semi-cylindrical sections **(42)** and said reverse-L-shaped pieces of said casing **(32)** combine to enclose said upper and lower stacks **(22, 24).**

11. The assembly as set forth in any of the preceding claims wherein said flow interrupters **(60)** are spaced a predetermined distance from each other with said predetermined distance being greater adjacent said air inlet chamber **(54)** than adjacent the associated one of said upper and lower slots **(44, 46).**

12. The assembly as set forth in claim 11 wherein said predetermined distance between said flow interrupters **(60)** serially decreases from said flow interrupters **(60)** adjacent said air inlet chamber **(54)** to said flow interrupters **(60)** adjacent the associated one of said upper and lower slots **(44, 46).**

## Patentansprüche

1. Batteriepack-Baugruppe zum Bereitstellen elektrischer Energie, umfassend:
Ein Batteriepack **(20),** das eine oberen, sich entlang einer Zellachse **(A)** erstreckenden Stack **(22)** einschließt, und mehr als
Eine Zelle **(26)** einschließt und einen Luftweg zum Kühlen definiert;
Jede Zelle **(26)** eine Zellwand **(34)** aufweist;
Wobei das Batteriepack **(20)** ein Gehäuse **(32)** einschließt, das eine Vorderseite und eine Rückseite aufweist und den oberen Stack **(22)** umschließt und eine Lufteinlasskammer **(54)** zum Aufnehmen eines Luftstromes und einen oberen Schlitz **(44)** zum Ausgeben des Luftstromes definiert; und
Das Batteriepack **(20)** einen Spalt **(37)** zwischen der Zellwand **(34)** und dem Gehäuse **(32)** zum Leiten des Stromes von Luft hierdurch definiert;
**Gekennzeichnet durch**
Eine Mehrzahl von Stromunterbrechern **(60),** die in dem Spalt **(37)** an wenigstens einer Zellwand **(34),** oder wenigstens an dem Gehäuse **(32),** angeordnet sind, und die umlaufend voneinander beabstandet sind und sich in Richtung des Gehäuses **(32)** bzw. in Richtung der Zellwand **(34)** erstrecken, um den Strom der Luft von der Lufteinlasskammer **(54)** zu dem oberen Schlitz **(44)** zu trennen; und
Wenigstens einer der Stromunterbrecher **(60)** sich von der Zellwand **(34)** bzw. von dem Gehäuse **(32)** in den Spalt **(37)** hinein erstreckt, um gegen das Gehäuse **(32)** bzw. die Zellwand **(34)** anzugreifen.

2. Baugruppe nach Anspruch 1, bei der der Spalt **(37)** einen Querschnitt aufweist, dessen Größe von der Vorderseite zu einem größeren Mittelpunt **(62)** zunimmt und dessen Größe von der Rückseite zu dem größeren Mittelpunkt **(62)** abnimmt.

3. Baugruppe nach Anspruch 1 oder 2, bei der jeder der Mehrzahl von Stromunterbrechern **(60)** sich von der Zellwand **(34),** bzw. dem Gehäuse **(32),** in den Spalt **(37)** erstreckt, um gegen das Gehäuse **(32)** bzw. die Zellwand **(34)** anzugreifen.

4. Baugruppe nach einem der vorhergehenden Ansprüche, bei der der Schlitz diametral gegenüberliegend der Einlasskammer **(54)** angeordnet ist.

5. Baugruppe nach einem der vorhergehenden Ansprüche, bei der das Batteriepack **(20)** weiter einen unteren Stack **(24)** einschließt.

6. Baugruppe nach Anspruch 5, bei der sich die oberen und unteren Stacks **(22, 24)** des Batteriepacks **(20)** Seite an Seite und in paralleler Beziehung zueinander erstrecken.

7. Baugruppe nach Anspruch 6, bei der jeder der oberen und unteren Stacks **(22, 24)** eine Mehrzahl von Zellen **(26)** zum Speichern und Übertragen elektrischer Energie einschließt.

8. Baugruppe nach Anspruch 7, bei der das Gehäuse **(32)** einen halbzylindrischen Abschnitt **(42)** definiert, der sich umlaufend um jeden der oberen und unteren Stacks **(22, 24)** und längs entlang der Zellachse **(A)** zwischen der Vorderseite und der Rückseite des Gehäuses **(32)** erstreckt.

9. Baugruppe nach Anspruch 8, bei der das Gehäuse **(32)** eine Mehrzahl von umgekehrt L-förmigen Teilen definiert, bei dem jedes umgekehrt L-förmige Teil **(56)** ein langes Bein **(48)** aufweist, das sich tangential von einem der halbzylindrischen Abschnitte **(42)** zu einem kurzen Bein **(50)** erstreckt, das sich transversal und von dem verbleibenden Abschnitt **(52)** des Stacks erstreckt, um einen eingeschlossenen Raum um den Umfang des Stacks zu bilden, um die Lufteinlasskammer **(54)** zu definieren.

10. Baugruppe nach Anspruch 9, bei der sich die halbzylindrischen Abschnitte **(42)** und umgekehrt L-förmigen Teile des Gehäuses **(32)** verbinden, um die oberen und unteren Stacks **(22, 24)** zu umschließen.

11. Baugruppe nach einem der vorhergehenden Ansprüche, bei der die Stromunterbrecher **(60)** in vorbestimmtem Abstand voneinander beabstandet sind, wobei der der Einlasskammer **(54)** benachbarte vorbestimmte Abstand größer als der Benachbarte, der den oberen und unteren Schlitze **(44, 46)** zugeordnet ist.

12. Baugruppe nach Anspruch 11, bei der sich der vorbestimmte Abstand zwischen den Stromunterbrechern **(60)** von den der Lufteinlasskammer **(54)** benachbarten Stromunterbrechern **(60)** zu den Stromunterbrechern **(60)** seriell verkleinert, die den oberen und unteren Schlitzen **(44, 46)** benachbart sind.

## Revendications

1. Ensemble de bloc-batterie pour fournir de l'énergie électrique comprenant :
un bloc-batterie **(20)** comprenant un empilement supérieur **(22)** s'étendant le long d'un axe de cellule **(A)** et comprenant plus d'une cellule **(26)** et définissant un passage d'air pour le refroidissement ;
chacun desdites cellules **(26)** ayant une paroi de cellule **(34) ;**
ledit bloc-batterie **(20)** comprenant un boîtier **(32)** ayant une face avant et une face arrière et enfermant ledit empilement supérieur **(22)** et définissant une chambre d'entrée d'air **(54)** pour recevoir un flux d'air et une fente supérieure **(44)** pour distribuer le flux d'air ; et
ledit bloc-batterie **(20)** définissant un interstice **(37)** entre ladite paroi de cellule **(34)** et ledit boîtier **(32)** pour canaliser le flux d'air entre eux ;
**caractérisé par**
une pluralité d'interrupteurs de flux **(60)** disposés dans ledit interstice **(37)** sur au moins ladite paroi de cellule **(34),** ou sur au moins ledit boîtier **(32),** et étant espacés l'un de l'autre de manière circonférentielle et s'étendant vers ledit boîtier **(32),** respectivement vers ladite paroi de cellule **(34),** pour perturber le flux d'air de ladite chambre d'entrée d'air **(54)** à ladite fente supérieure **(44) ;** et
au moins un desdits interrupteurs de flux **(60)** s'étend à partir de ladite paroi de cellule **(34),** respectivement à partir dudit boîtier **(32),** dans ledit interstice **(37)** pour engager ledit boîtier **(32),** respectivement ladite paroi de cellule **(34).**

2. Ensemble selon la revendication 1, dans lequel ledit interstice **(37)** a une section transversale de taille croissante de ladite face avant à un point central plus grand **(62)** et de taille croissante de ladite face arrière audit point central plus grand **(62).**

3. Ensemble selon la revendication 1 ou 2, dans lequel chacun de ladite pluralité d'interrupteurs de flux **(60)** s'étend à partir de ladite paroi de cellule **(34),** respectivement ledit boîtier **(32),** dans ledit interstice **(37)** pour engager ledit boîtier **(32),** respectivement ladite paroi de cellule **(34).**

4. Ensemble selon l'une quelconque des revendications précédentes, dans lequel ladite fente est disposée de manière diamétralement opposée à ladite chambre d'entrée d'air **(54).**

5. Ensemble selon l'une quelconque des revendications précédentes, dans lequel ledit bloc-batterie **(20)** comprend en outre un empilement inférieur **(24).**

6. Ensemble selon la revendication 5, dans lequel lesdits empilements supérieur et inférieur **(22, 24)** dudit bloc-batterie **(20)** s'étendent dans une relation côte à côte et parallèle.

7. Ensemble selon la revendication 6, dans lequel chacun desdits empilements supérieur et inférieur **(22, 24)** comprend une pluralité de cellules **(26)** pour stocker et transmettre de l'énergie électrique.

8. Ensemble selon la revendication 7, dans lequel ledit boîtier **(32)** définit une section semi-cylindrique **(42)** s'étendant de manière circonférentielle autour de chacun desdits empilements supérieur et inférieur **(22, 24)** et longitudinalement le long dudit axe de cellule **(A)** entre lesdites face avant et face arrière dudit boîtier **(32).**

9. Ensemble selon la revendication 8, dans lequel ledit boîtier **(32)** définit une pluralité de pièces en forme de L renversé avec chaque pièce en forme de L renversé **(56)** ayant une branche longue **(48)** s'étendant tangentiellement d'une desdites sections semi-cylindriques **(42)** à une branche courte **(50)** s'étendant transversalement et espacée d'une portion restante **(52)** dudit empilement pour créer un espace fermé autour du périmètre dudit empilement pour définir ladite chambre d'entrée d'air **(54).**

10. Ensemble selon la revendication 9, dans lequel lesdites sections semi-cylindriques **(42)** et lesdites pièces en forme de L renversé dudit boîtier **(32)** se combinent pour enfermer lesdits empilements supérieur et inférieur **(22, 24).**

11. Ensemble selon l'une quelconque des revendications précédentes, dans lequel lesdits interrupteurs de flux **(60)** sont espacés l'un de l'autre d'une distance prédéterminée avec ladite distance prédéterminée étant plus grande de manière adjacente à ladite chambre d'entrée d'air **(54)** que de manière adjacente à celle associée desdites fentes supérieure et inférieure **(44, 46).**

12. Ensemble selon la revendication 11, dans lequel ladite distance prédéterminée entre lesdits interrupteurs de flux **(60)** diminue de manière sérielle desdits interrupteurs de flux **(60)** adjacents à ladite chambre d'entrée d'air **(54)** auxdits interrupteurs de flux **(60)** adjacents à celle associée desdites fentes supérieure et inférieure **(44, 46).**
